# EUROPEAN PATENT SPECIFICATION

(11) **EP 1 089 611 B1**
(45) Date of publication and mention of the grant of the patent: **01.09.2004**
(21) Application number: 99933388.3
(22) Date of filing: 24.06.1999
(51) Int. Cl.: A01G 13/10

(54) **PLANT PROTECTION**
PFLANZENSCHUTZEINRICHTUNG
SYSTEME DE PROTECTION DE VEGETAUX

(30) Priority: 26.06.1998 SE 9802291
(43) Date of publication of application: 11.04.2001
(73) Proprietor: Svensson, Martin, 244-60 Furulund (SE); Svensson, Sigfrid, 118 52 Stockholm (SE)
(72) Inventor: Svensson, Martin, 244-60 Furulund (SE); Svensson, Sigfrid, 118 52 Stockholm (SE)
(74) Representative: Burman, Tore
(86) International application number: PCT/SE1999/001148
(87) International publication number: WO 2000/000015

(56) References cited:
- SE-A- 7 705 749

## Description

The present invention concerns a plant protection system for afforested tree plants. The plant protection system is intended to stop attacks from pine weevils and is composed of a cylindrical or conical tube suited to surround an afforested tree plant. The plant protection system is further comprised of at least one surrounding collar, at the top of the tube, pointing outwards. At the time of afforesting of trees, especially coniferous trees, attacks by pine weevils are a serious problem as they cause substantial damages on the tree plants. Such attacks therefore constitute high costs since the yield in the afforesting is significantly reduced.

The pine weevil is an insect that can cause great damage on young tree plants. The beetle normally attacks the plant by climbing onto it from the ground and then eating the fresh bark. The removal of the bark results in the death of the plant.

The pine weevil can vary in size from 7-14 mm, and it orients itself by the use of antennae and eyes. It has six legs with claws and "arolium", which is a type of suction device which enables the insect to move on vertical, glossy surfaces and even upside down on horizontal surfaces.

Mechanical devices intended to protect the delicate tree plant has been suggested and as an example can be mentioned collars in the shape of funnel-shaped tubes which surround the lower part of the plant and which also may be equipped with an outward directed collar. These devices are intended to prevent ground-bound insects access to the plant. Another example of a mechanical protection system can be found in the international patent application WO 91/12717, which describes a mechanical barrier in the form of a product consisting of a large number of thin fibres or threads which form a net to be placed around the tree plant. These devices are, however, associated with essential shortcomings in that the devices with collars do not prevent the attacks from the pine weevil since it easily can climb up and around the collar. The fibre variant has the drawback, besides being expensive, that it is difficult to apply onto the tree plant.

In order to increase the difficulty for the pine weevil to penetrate protective devices with a downward directed collar it is described in the patent SE 7705747-9 a plant protection device with a downward directed collar. Further this downward directed collar is equipped, at the lower edge, with an inner upward and towards the inner tube directed collar. With these devices the risk is lower that the pine weevils can find the way to the outer surface of the outer collar since being on the inner collar they are directed towards the tube. When the upper edge of the inner collar ends at a distance of 10 mm or less it is, however, possible for the pine weevil to climb from the tube directly to inner collar and thus reach its outer surface.

The present invention is intended to achieve a mechanical plant protection system that is cheap and easy to apply.

Another intention with the invention is to achieve a plant protection system that in the combination with deterrent or toxic chemicals constitutes an effective barrier for the attack on afforested tree plants against the attack from insects.

For the above and other purposes, which will be evident from the following detailed description this invention will achieve a plant protection system through a cylindrical or conical tube, suited to surround an afforested tree plant. This tube is equipped with at least, at its upper part, with a surrounding outward directed collar. The plant protection system according to the invention is characterised by that the above mentioned collar is equipped with a downward directed outer portion and an upward directed inner part. The distance between the lower part of the collar and the tube shall be sufficient for the pine weevil to pass through the slit between the tube and the lower part of the collar. This distance is normally greater than 10 mm. The height of the cylindrical or conical tube can vary within a relatively wide range and is typically 50-150 mm.

According to a preferred embodiment of the plant protection system the inner tube mentioned and the collar are constructed without essential jumps. This means in other words that both the tube and the collar has a continuous curvature and that any sharp creases which could facilitate for the pine weevil to climb, is avoided.

The plant protection system according to the invention can be made with the collar as a separate unit connected to the tube in a suitable manner.

According to one embodiment of the invention the collar, mentioned is designed with its respective parts linear in an axial cross section.

It is preferred that the plant protection system is made out of a biodegradable material, e.g. biodegradable plastics, but a specially preferred is to make both the tube and collar from cellulose based materials such as stiff paper, cardboard or cellophane.

To further enhance the effectiveness of the plant protection system the tube can be equipped with two or more collars placed under each other.

In order to make it more difficult for the pine weevil to climb the inside if the collar can be equipped with groves or riblets in the direction perpendicular to the free edge of the collar,

In order to simplify the production of the plant protection system it is preferred that the tube essentially has an elliptical or circular-cylindrical cross-section. It is further preferred that the tube is slightly tapered downwards in order to make it possible to stack many plant protection systems which will minimise space during transport.

With regards to the distance between the edge if the collar and the tube it is preferred that this distance is ca. 1 to ca. 1.5 times the length of the extended pine weevil.

In order to facilitate the circulation of air inside the tube it may have small radial holes.

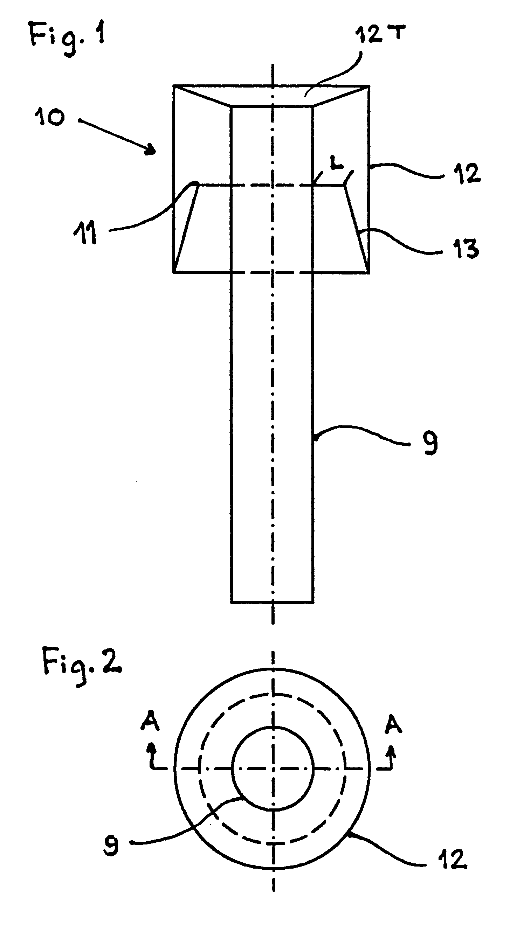

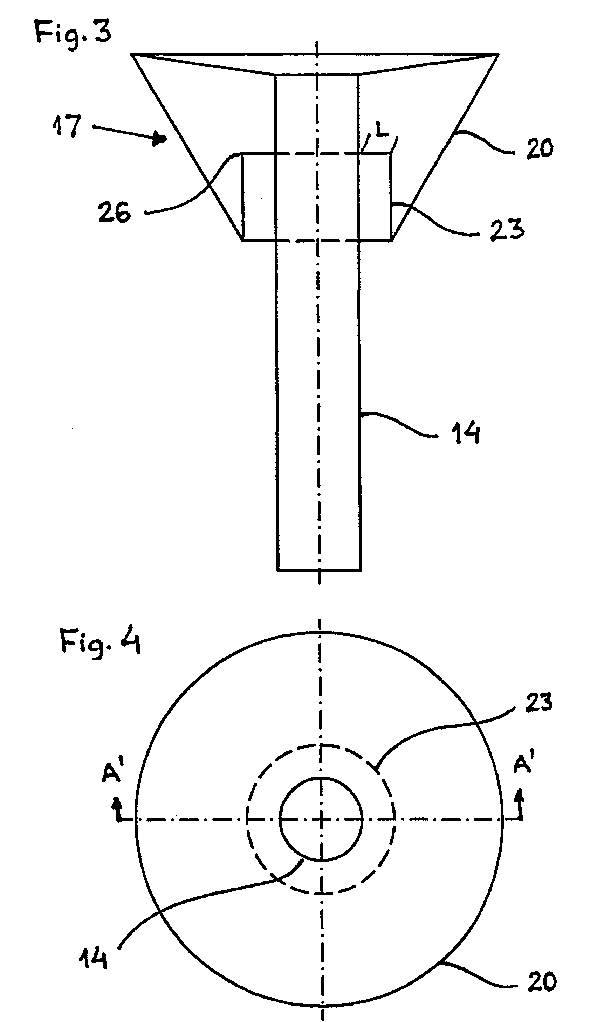

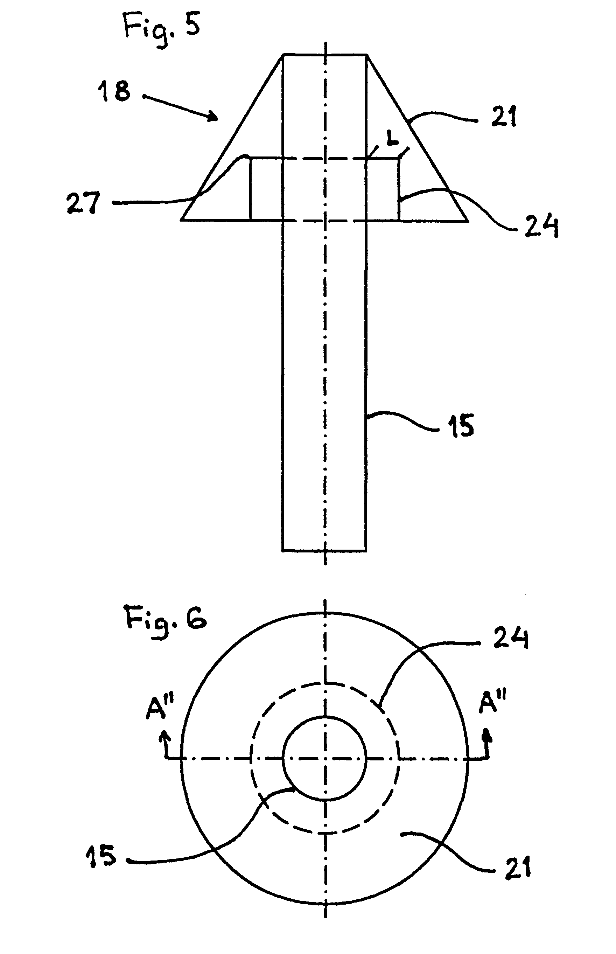

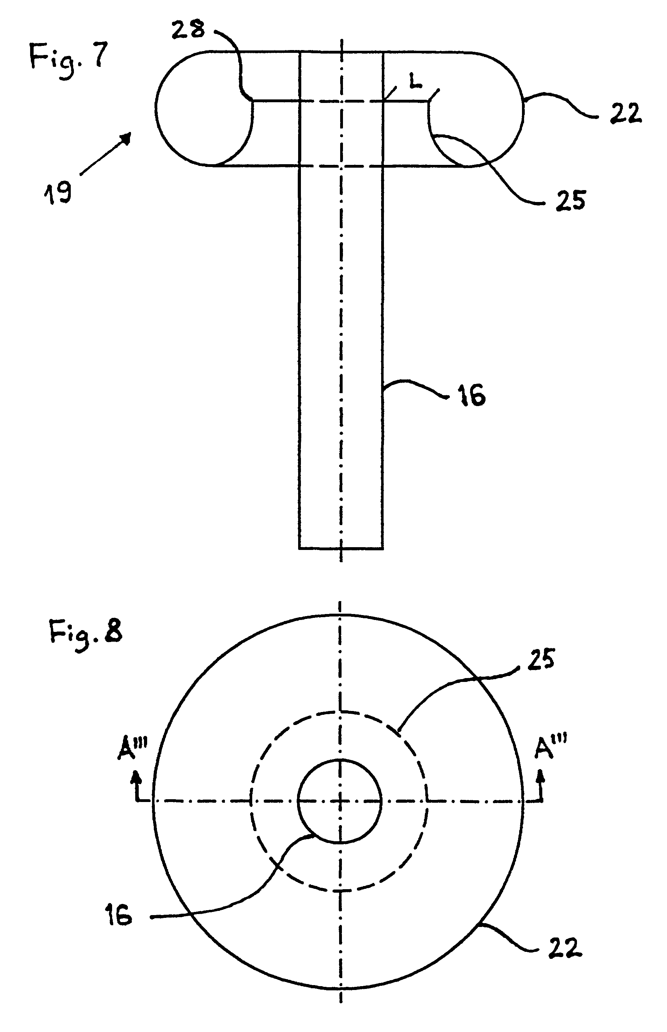

The invention will now be described closer by nonlimiting examples in connection with annexed drawings. In the drawings is shown plant protection systems in the form of preferred embodiments, in which Fig.1 shows the plant protection system in a side-view in a section along the line A-A in Fig. 2, whereas Fig. 2 shows a view of the plant protection system seen from above. Fig. 3 and Fig. 4 show another preferred embodiment in which the inner upward directed part is essentially vertical. Fig. 5 and Fig. 6 show an embodiment in which the downward directed part of the outward pointing collar has a sharp angle in relation to the surface of the tube and in which the upward directed part is essentially vertical in the direction towards the outer downward directed part. An alternative, more general, embodiment is shown in the Figures 7 and 8 with the corresponding views as in the Figures 1 and 2.

### Examples

The plant protection system shown in the drawings 1 and 2 consists of a cylindrical or conical tube 9, which upper portion is equipped with a downward directed collar 10, which is composed of a tilted outward directed part 12T and a downward directed part 12. The outward directed part 12 is connected to an upward directed part 13. The embodiment shown in the drawing is circular and cylindrical in a horizontal cross section.

The distance L in the shown embodiment between the tube 9 and the free edge of the collar 11, for satisfactory functionality, shall be long enough to allow the pine weevil to freely pass through the space between the tube 9 and the above mentioned free edge.

With the aim to improve the effectiveness of the plant protection system it is possible to apply some, for the pine weevil, deterrent or toxic substance in the area inside the collar 10. As examples of deterrent substances can be mentioned Limonene, Verbenone and Carvone. Examples of toxic substances are pyrethrins. The advantage with placing such substances under the collar is that the substance can remain for a longer time since the collar protects them against climatic influences such as rain and strong winds.

In practice the plant protection system is applied, before or after, the aforresting around the lower part of the plant and the lower part of the tube is inserted into the ground.

The plant protection system according to the Figures 1 and 2 is designed in such a way that it will utilise the inherited movement patterns of the pine weevil. Studies have shown that a pine weevil will continue to climb upwards and never downwards unless it encounters an obstruction.

When the pine weevil reaches the inner tube 9 which surround the plant it can choose to climb upwards in which case it will reach the ceiling 11. The pine weevil will not discover the lower edge of the collar 10, but even if it would, the distance between the tube and the collar is to long in order for the pine weevil to climb over the gap. When the pine weevil passes the free edge of the collar 11 it on rare occasions can detect it. The distance between the tube and the free edge is preferably longer than 1-1.5 times the length of the pine weevil and thus normally to long for the pine weevil to climb over. When the pine weevil reaches the edge between the tube 9 and the ceiling 11 it will generally walk around the tube some turns and investigate the surroundings with antennae and tarsus. The pine weevil will then choose between two alternatives:
1. Go back down the tube 9 (10-20 % probability).
2. Climb out onto the roof 12T.

If the pine weevil chooses to climb out onto the roof it will have some problems angled part between the tube 9 and the roof 12T (will loose its footing in about 20 % of the attempts). If it looses its footing it will in most cases fall to the ground, but if it has moved some distances on the roof it may fall between the upward directed part of the collar 13 and the downward directed part 12.

If the pine weevil succeeds in climbing out onto the ceiling it walks around on the ceiling. It will detect two possibilities for further progress:
1. Climb back onto the tube 9 (10-20 % probability).
2. Climb over to the inside of the downward directed part 12 of the collar.

If the pine weevil chooses to climb over to the inside of the downward directed part 12 of the collar it must pass a new angled part will present some difficulties. Should it choose its grip it will in most cases fall in between the upward directed part 13 of the collar and the downward directed part 12 of the collar. From this position the pine weevil will soon discover the free edge 11 of the upward directed part 13 of the collar. The pine weevil will now walk around on this edge investigating the surroundings. The pine weevil will soon be confused but will after a large number of turns climb over to the inside of the downward directed part 12 of the collar. The pine weevil will never choose to climb down on the inside of the upward directed part 13 of the collar, since no obstacle or new edge can be found in that direction. Compare the situation when you place a pine weevil close to the lower edge of the upward directed part 13 of the collar in which case it will easily detect this edge and readily climb around this edge onto the outside of the downward directed part 12 of the collar and soon reach the outside of the ceiling 12T getting access to the plant.

This is the principle upon which this innovation is based. Since the pine weevil never will climb downwards, as long it does not encounter any obstacle, the plant protection system could in principle be only a tube surrounding the plant. The problem with this simple solution is that sometimes fall when climbing around the free edge and with a simple surrounding tube it will fall inside the tube in 50 % of the cases.

The plant protection system described in the Figures 1 and 2; 3 and 4; 5 and 6; or 7 and 8 are, however, designed in such a way that the pine weevil never can reach the plant in case it falls down.

The pine weevil will leave the plant protections systems according to the Figures 1-8 in three different ways:
1. By going back the same way as it entered.
2. By falling from the angled part between the inner tube and the ceiling.
3. By falling from the upper edge 11 (Fig. 1) of the upward directed part 13 of the collar.

The working principles for the embodiments shown in Figures 3 and 4, 5 and 6 as well as 7 and 8 are the same as for the embodiment shown in Figures 1 and 2. In all embodiments the tube 9 (Fig. 1 and 2) can be made conical in order to minimise space in transports.

The plant protection system according to the invention is preferably manufactured in using a biodegradable material, for example using a biodegradable plastic material or preferably cellulose based material such as cellophane. The plant protection system can be manufactured in one or several part moulding or compression techniques. Alternatively the tube 9 (Fig. 1 and 2) and the collar 10 (Fig. 1 and 2) in all embodiments be manufactured separately and the collar 10 can then be applied on top of the tube 9 in a suitable way.

It should be observed that the invention is not limited to the embodiments described above. Thus modifications and changes can be made inside the framework for the invention.

## Claims

1. Plant protection system for newly afforested tree plants designed to prevent attacks from pine weevils, consisting of a cylindrical or conical tube (9; 14; 15; 16) suited to surround a tree plant and also at least one outward directed, surrounding collar(10; 17; 18; 19) connected to the upper part of the tube, the mentioned collar (10; 17; 18; 19) consisting of a downward directed outer part (12; 20; 21; 22) and an inner upward directed part (13; 23; 24; 25),
**characterised in that**
said inner, upward directed part (13; 23; 24; 25) does not point in the direction towards the tube (9; 14; 15; 16), and the distance (L) between the free edge (11; 26; 27; 28) of the inner part (13; 23; 24; 25) of the collar and the outer surface of the tube (9; 14; 15; 16) is greater than 1 to 1.5 times the length of the pine weevil so that direct passage between the tube (9; 14; 15; 16) and the free edge (11; 26; 27; 28) is avoided.

2. Plant protection system according to claim 1, wherein said outer part (12; 20; 22) does not have a sharp angle in relation to the inner tube (9; 14; 16).

3. Plant protection system according to claim 1, wherein said outer part (21) has a sharp angle in relation to the inner tube (15).

4. Plant protection system according to claim 1, 2 or 3 **characterised in that** the tube (9; 14; 15; 16) and the collar (10; 17; 18; 19) are designed without essential jumps in the curvatures.

5. Plant protection system according to any one of the previous claims, **characterised in that** the collar (10; 17; 18; 19) is made as a separate unit attached to the tube (9; 14; 15; 16).

6. Plant protection system according to any one of the previous patent claims,
**characterised in that** both the tube (9; 14; 15; 16) and the collar (10; 17; 18; 19) are manufactured from cellulose based material such as stiff paper, cardboard paper or cellophane.

7. Plant protection system according to any one of the previous patent claims,
**characterised in that** the tube (9; 14; 15; 16) is equipped with two or more under each other situated collars (10; 17; 18; 19).

8. Plant protection system according to any one of the previous patent claims,
**characterised in that** the inside of the collar (10; 17; 18; 19) is designed with tracks or riblets which extend perpendicularly to the free lower edge of the collar, and which inhibit the action of the suction system of the pine weevil.

9. Plant protection system according to any one of the previous patent claims,
**characterised in that** the tube (9; 14; 15; 16) has an elliptical or circular cross section.

10. Plant protection system according to any one of the previous patent claims,
**characterised in that** the tube (9; 14; 15; 16) has small radial holes in order to facilitate air circulation inside the tube.

11. Plant protection system according to any one of the previous patent claims,
**characterised in that** the tube (9; 14; 15; 16) is made upwards, slightly conical and widening.

12. Plant protection system according to any one of the previous patent claims,
**characterised in that**, the upward directed part (13; 23; 24; 25) is essentially vertical.

13. Use of a plant protection system according to any one of the previous patent claims for preventing the pine weevil to climb down on the inside of the upward directed part (13; 23; 24; 25) of the collar.

## Patentansprüche

1. Pflanzenschutzsystem für neuaufgeforstete Baumpflanzen, das so konzipiert ist, dass Angriffe von Fichtenrüsselkäfern verhindert werden, bestehend aus einem zylindrischen oder konischen Rohr (9; 14; 15; 16), das geeignet ist, eine Baumpflanze zu umgeben, und auch mindestens einen auswärts gerichteten Umfangskragen (10; 17; 18; 19), der mit dem oberen Teil des Rohrs verbunden ist, wobei der erwähnte Kragen (10; 17; 18; 19) aus einem abwärts gerichteten äußeren Teil (12; 20; 21; 22) und einem inneren aufwärts gerichteten Teil (13; 23; 24; 25) besteht,
**dadurch gekennzeichnet, dass**
der innere aufwärts gerichtete Teil (13; 23; 24; 25) nicht in die Richtung auf das Rohr (9; 14; 15; 16) zeigt und der Abstand (L) zwischen dem freien Rand (11; 26; 27; 28) des inneren Teils (13; 23; 24; 25) des Kragens und der Außenseite des Rohrs (9; 14; 15; 16) größer als 1 bis 1,5 mal die Länge des Fichtenrüsselkäfers ist, so dass ein direkter Übertritt zwischen dem Rohr (9; 14; 15; 16) und dem freien Rand (11; 26; 27; 28) vermieden wird.

2. Pflanzenschutzsystem nach Anspruch 1, bei dem der äußere Teil (12; 20; 22) keinen spitzen Winkel in Bezug zum inneren Rohr (9; 14; 16) aufweist.

3. Pflanzenschutzsystem nach Anspruch 1, bei dem der äußere Teil (21) einen spitzen Winkel in Bezug zum inneren Rohr (15) aufweist.

4. Pflanzenschutzsystem nach Anspruch 1, 2 oder 3, **dadurch gekennzeichnet, dass** das Rohr (9; 14; 15; 16) und der Kragen (10; 17; 18; 19) ohne wesentliche Sprünge in den Krümmungen konzipiert sind.

5. Pflanzenschutzsystem nach einem der vorangehenden Ansprüche, **dadurch gekennzeichnet, dass** der Kragen (10; 17; 18; 19) als eine separate Einheit hergestellt ist, die am Rohr (9; 14; 15; 16) angebracht ist.

6. Pflanzenschutzsystem nach einem der vorangehenden Ansprüche,
**dadurch gekennzeichnet, dass** sowohl das Rohr (9; 14; 15; 16) als auch der Kragen (10; 17; 18; 19) aus Material auf Cellulosebasis gefertigt sind, wie z.B. steifes Papier, Kartonpapier oder Cellophan.

7. Pflanzenschutzsystem nach einem der vorangehenden Ansprüche,
**dadurch gekennzeichnet, dass** das Rohr (9; 14; 15; 16) mit zwei oder mehr unter einander gelegenen Kragen (10; 17; 18; 19) ausgerüstet ist.

8. Pflanzenschutzsystem nach einem der vorangehenden Ansprüche,
**dadurch gekennzeichnet, dass** die Innenseite des Kragens (10; 17; 18; 19) mit Spuren oder Rippchen konzipiert ist, die sich senkrecht zum freien unteren Rand des Kragens erstrecken und die die Wirkung des Saugsystems des Fichtenrüsselkäfers hemmen.

9. Pflanzenschutzsystem nach einem der vorangehenden Ansprüche,
**dadurch gekennzeichnet, dass** das Rohr (9; 14; 15; 16) einen elliptischen oder kreisförmigen Querschnitt aufweist.

10. Pflanzenschutzsystem nach einem der vorangehenden Ansprüche,
**dadurch gekennzeichnet, dass** das Rohr (9; 14; 15; 16) kleine radiale Löcher aufweist, um eine Luftzirkulation im Innern des Rohrs zu erleichtern.

11. Pflanzenschutzsystem nach einem der vorangehenden Ansprüche,
**dadurch gekennzeichnet, dass** das Rohr (9; 14; 15; 16) aufwärts etwas konisch und sich ausweitend hergestellt ist.

12. Pflanzenschutzsystem nach einem der vorangehenden Ansprüche,
**dadurch gekennzeichnet, dass** der aufwärts gerichtete Teil (13; 23; 24; 25) im Wesentlichen vertikal ist.

13. Verwendung eines Pflanzenschutzsystem nach einem der vorangehenden Ansprüche, um zu verhindern, dass der Fichtenrüsselkäfer auf der Innenseite des aufwärts gerichteten Teils (13; 23; 24; 25) des Kragens nach unten klettert.

## Revendications

1. Système de protection de végétaux pour des arbres récemment plantés, conçu pour empêcher les attaques du charançon du pin, constitué d'un tube cylindrique ou conique (9; 14; 15; 16) convenant pour entourer un arbre et également au moins un collier entourant dirigé vers l'extérieur (10; 17; 18; 19) relié à la partie supérieure du tube, le collier mentionné (10; 17; 18; 19) étant constitué d'une partie externe dirigée vers le bas (12; 20; 21; 22) et d'une partie interne dirigée vers le haut (13; 23; 24; 25),
**caractérisé en ce que**
ladite partie interne dirigée vers le haut (13; 23; 24; 25) ne pointe pas en direction du tube (9; 14; 15; 16) et la distance (L) entre le bord libre (11; 26; 27; 28) de la partie interne (13; 23; 24; 25) du collier et la surface externe du tube (9; 14; 15; 16) est supérieure à 1 à 1,5 fois la longueur du charançon du pin afin d'éviter un passage direct entre le tube (9; 14; 15; 16) et le bord libre (11; 26; 27; 28).

2. Système de protection de végétaux selon la revendication 1, dans lequel ladite partie externe (12; 20; 22) ne fait pas un angle aigu par rapport au tube interne (9; 14; 16).

3. Système de protection de végétaux selon la revendication 1, dans lequel ladite partie externe (21) fait un angle aigu par rapport au tube interne (15).

4. Système de protection de végétaux selon la revendication 1, 2 ou 3, **caractérisé en ce que** le tube (9; 14; 15; 16) et le collier (10; 17; 18; 19) sont conçus sans sauts essentiels dans les courbes.

5. Système de protection de végétaux selon l'une quelconque des revendications précédentes, **caractérisé en ce que** le collier (10; 17; 18; 19) est fabriqué sous la forme d'une unité séparée fixée au tube (9; 14; 15; 16).

6. Système de protection de végétaux selon l'une quelconque des revendications précédentes, **caractérisé en ce que** le tube (9; 14; 15; 16) et le collier (10; 17; 18; 19) sont tous deux fabriqués à partir d'un matériau à base de cellulose, tel que du papier rigide, du papier cartonné ou de la cellophane.

7. Système de protection de végétaux selon l'une quelconque des revendications précédentes, **caractérisé en ce que** le tube (9; 14; 15; 16) est muni de deux colliers (10; 17; 18; 19) ou plus situés l'un en dessous de l'autre.

8. Système de protection de végétaux selon l'une quelconque des revendications précédentes, **caractérisé en ce que** l'intérieur du collier (10; 17; 18; 19) est conçu avec des voies ou de petites nervures s'étendant perpendiculairement au bord inférieur libre du collier et qui bloquent l'action du système de succion du charançon du pin.

9. Système de protection de végétaux selon l'une quelconque des revendications précédentes, **caractérisé en ce que** le tube (9; 14; 15; 16) a une coupe transversale elliptique ou circulaire.

10. Système de protection de végétaux selon l'une quelconque des revendications précédentes, **caractérisé en ce que** le tube (9; 14; 15; 16) a de petits trous radiaux pour faciliter la circulation de l'air dans le tube.

11. Système de protection de végétaux selon l'une quelconque des revendications précédentes, **caractérisé en ce que** le tube (9; 14; 15; 16) est dirigé vers le haut, est légèrement conique et s'élargit.

12. Système de protection de végétaux selon l'une quelconque des revendications précédentes, **caractérisé en ce que** la partie dirigée vers le haut (13; 23; 24; 25) est essentiellement verticale.

13. Utilisation d'un système de protection de végétaux selon l'une quelconque des revendications précédentes pour empêcher que le charançon du pin ne descende à l'intérieur de la partie du collier dirigée vers le haut (13; 23; 24; 25).
